# EUROPÄISCHE PATENTANMELDUNG

(11) **EP 4 745 063 A1**
(43) Veröffentlichungstag der Anmeldung: **20.05.2026**
(21) Anmeldenummer: 25210263.7
(22) Anmeldetag: 22.10.2025
(51) Int. Cl.: B65G 47/52, B65G 47/82, B65G 59/02

(54) **KOMPAKTER UNIVERSAL-DEPALLETTIERER**

(30) Priorität: 13.11.2024 IT 202400025563
(71) Anmelder: Tanzer Maschinenbau Srl, 39011 Lana (BZ) (IT)
(72) Erfinder: Gitterle, Christof, 39020 Kastelbel Tschars (IT); Mantinger, Martin, 39010 Nalles (IT); Tanzer, Peter, 39011 Lana (IT); Von Sölder zu Prackenstein, Otto, 39011 Lana (IT)
(74) Vertreter: Ausserer, Thomas

(57) **Zusammenfassung**

Die Erfindung betrifft einen Depalettierer (100) für Paletten (200), bestehend aus:
-Positionierungsvorrichtung (110) mit einer Ladefläche mit Lademitteln zum Bewegen mindestens einer Palette (200), auf der eine Ladung (201, 202, 203, 204) angeordnet ist, vom Ladebereich zu einer angrenzenden Vorrichtung (120),
-die Schubvorrichtung (120) zum Ausrichten der Palette (200) an der Arbeitsfläche (122) auszurichten und die eine Schubstange (121) umfasst, die betätigt wird, um die Ladung (201, 202, 203, 204) der mindestens einen Palette auf ein erstes, an die Schubvorrichtung angrenzendes Übergabeelement (130) zu schieben,
-das erste Übergabeelement (130),
-einen Entladebereich (140) neben der Schubvorrichtung (120), in den die leere Palette (200) nach dem Entpalettieren bewegt wird,
Gemäß der Erfindung kann die Schubstange (121) in ihrer Länge verstellt werden, um nur einen Teil der Ladung (201, 202, 203, 204) von der Palette zu schieben, und zwischen der Schubeinrichtung (120) und dem ersten Übertragungselement (130) ist die Arbeitsfläche (122) angeordnet ist und dass in der vorgeschobenen Position die Arbeitsfläche (122) mit dem ersten Übertragungselement (130) zumindest teilweise in Kontakt steht und/oder dieses zumindest teilweise überlappt und in der zurückgezogenen Position zwischen der Arbeitsfläche (122) und dem ersten Übertragungselement (130) ein Spalt (123) gebildet wird.

## Beschreibung

Die vorliegende Erfindung bezieht sich auf einen kompakten Universal-Depallettierer gemäß dem klassifizierenden Teil des Anspruchs 1 und eine Vorrichtung für dieses System.

### Anwendungsbereich

Der Anwendungsbereich der vorliegenden Erfindung ist der Bereich der Depalettierer, insbesondere kompakter Depalettierer, die Paletten von ihrer Ladung, beispielsweise aus gestapelten Behältern, befreien müssen. Es können Depalettierer erforderlich sein, die eine große Anzahl von Paletten bearbeiten müssen, oder Depalettierer, die auf begrenztem Raum arbeiten müssen und daher kompakt sein müssen, aber gleichzeitig Paletten von verschiedenen Arten von Ladungen befreien müssen, beispielsweise gefaltete Behälter mit unterschiedlicher Grundform, weshalb sie universell sein müssen. Die vorliegende Erfindung bezieht sich auf einen kompakten Depalettierer.

### Stand der Technik

Aus EP 3 766 812 ist ein Depalettierer bekannt, der mit einer Übergabevorrichtung zum Aufnehmen der zugeführten beladenen Palette und zum anschließenden Abgeben der entladenen Palette sowie mit einer Abgabeleiste zum Schieben der Ladung quer zur Zuführrichtung des Depalettierers zu einer Übergabevorrichtung für die entpalettierte Ladung ausgestattet ist und bei dem der Depalettierer in der Höhe verstellbar ist. Wenn eine Palette mit unterschiedlichen Ladungen beladen ist, beispielsweise mit verschiedenen gestapelten Behältern unterschiedlicher Größe, kann eine Aufteilung dieser Ladungen erforderlich sein.

Aus WO2019 140473 ist ein System zum Transportieren und Lagern von Ladungen bekannt. In WO2019 140473 wird eine Trennvorrichtung beschrieben, die in einem Rahmen angeordnet ist, um die Ladungen mittels eines Keilelements zu trennen, das von oben nach unten verläuft und die Ladungen trennt.

Dieses System hat das Problem, dass sich das keilförmige Trennelement in der Ladung verkeilen kann und dass, wenn die Ladung aus einem Stapel von Behältern/Kisten besteht und der Stapel nicht ausgerichtet ist, das keilförmige Element den Stapel zum Umfallen bringen kann.

Aus FR 3 032 441 A1 ist ein Verfahren und ein System zum Entladen auf einer Station zum Freigeben von Paketen bekannt, die zuvor auf der Oberseite mindestens einer Schale mit mindestens einem Seitenrand abgelegt wurden. Die Schale weist eine umlaufende Nut neben dem genannten Rand auf. Das Tablett wird auf einen Förderer gestellt, die relative Position der Pakete zum Tablett wird so eingestellt, dass sich die Pakete auf der Oberseite des Tabletts vollständig außerhalb der oben genannten Nut befinden, dann wird das Tablett vor die Entleerungsstation bewegt, die an ihrer Verbindung mit dem Förderband mit einem beweglichen, winkelförmigen Deflektor mit einem um einen Winkel α nach unten geneigten Flügel ausgestattet ist, wobei sich dieser Deflektor in einer hohen Position befindet, die es dem Seitenrand (des Tabletts entweichen kann. Anschließend wird der Deflektor so verschoben, dass die Kante des geneigten Flügels in die Nut einrastet, und die Pakete seitlich auf den Deflektor geschoben werden.

### Beschreibung

Der Zweck der vorliegenden Erfindung besteht darin,
einen Depalettierer für Paletten, insbesondere mit verschiedenen Behältern, die in Stapeln unterschiedlicher Größe aufeinandergestapelt sind, bereitzustellen, der in der Lage ist, die einzelnen Stapel zu trennen, um eine weitere Bearbeitung, beispielsweise die Reinigung der Behälter/Kisten, zu ermöglichen.

Dieser Zweck wird durch ein System gemäß dem kennzeichnenden Teil des Anspruchs 1 erreicht. Gemäß dem kennzeichnenden Teil des Anspruchs 1 wird ein Depalettierer für Paletten vorgeschlagen, bestehend aus:
- Positionierungsvorrichtung mit einer Ladefläche mit Lademitteln zum Bewegen mindestens einer Palette vom Ladebereich zu einer angrenzenden Schiebevorrichtung,
- Schiebevorrichtung zum Ausrichten der Palette auf der Arbeitsfläche mit einer betätigten Schubstange zum Schieben der Last der mindestens einen Palette auf ein an die Schiebevorrichtung angrenzendes Förderband,
- einem Übergabegerät, beispielsweise einem Förderband, einem Rollen- und/oder Kettenförderer,
- einem an die Schubvorrichtung angrenzenden Entladebereich, in den die leere Palette nach dem Entpalettieren bewegt wird,
   gemäß der Erfindung
- die Schubstange in ihrer Länge verstellbar ist, um nur einen Teil der Ladung von der Palette zu schieben, und dass zwischen der Schubeinrichtung und dem Übertragungselement, beispielsweise einem Förderband, ein Rollen- und/oder Kettenförderer angeordnet ist, eine Ladefläche, die in der vorgeschobenen Position auch nur teilweise/zumindest mit dem Übergabegerät in Kontakt steht und/oder dieses überlappt, und in der zurückgezogenen Position zwischen der Ladefläche und dem Übergabegerät ein Spalt vorhanden ist.

Vorteilhafterweise weist die Ladefläche auf der Seite des Übertragungsorgans eine Lippe auf, die in der vorgeschobenen Position zumindest teilweise das Übertragungsorgan überlappt und in der zurückgezogenen Position einen Spalt zwischen dem Übertragungsorgan und der Lippe bildet, vorteilhafterweise besteht die Ladefläche aus einer Metallplatte und die Lippe weist eine geringere Dicke als die Metallplatte auf. Vorteilhafterweise ist das Übertragungselement ein Förderband.

Vorteilhafterweise transportiert ein Kettenförderer die Palette vom Ladebereich zur Schiebevorrichtung, vorteilhafterweise transportiert dieser Kettenförderer dann auch die leere Palette zum Entladebereich. Vorteilhafterweise wird die Palette in der Schiebevorrichtung von einem Rollenförderer gestützt, der auch ein Hebesystem umfasst, um die Palette an die Arbeitsfläche anzupassen, was bedeutet, dass die Oberseite, auf der die Ladung angeordnet ist, mit der Oberfläche der Arbeitsfläche ausgerichtet ist und der Rollenförderer die Palette während der Schiebephase der Hebestange in Kontakt mit der Arbeitsfläche bringt oder zumindest teilweise überlappt, wodurch sichergestellt wird, dass zwischen der Arbeitsfläche und der Palette kein Spalt entsteht.

Vorteilhafterweise wird die Hebevorrichtung in ihrer Höhe durch ein Exzenterrad verstellt, das die Palette je nach ihrer Dicke anhebt oder absenkt.

Weitere Zwecke, Merkmale, Vorteile und Anwendungsmöglichkeiten ergeben sich aus der folgenden Beschreibung einiger Ausführungsbeispiele und den dazugehörigen Zeichnungen. Damit bilden alle in den Figuren beschriebenen und/oder dargestellten Merkmale für sich oder in beliebiger Kombination den hier offenbarten Gegenstand, auch unabhängig von ihrer Gruppierung in den Ansprüchen oder ihrer Abhängigkeit voneinander, wobei:
Figur 1 eine Draufsicht auf einen Depalettierer mit einer Palette in der ersten Position gemäß der Erfindung zeigt,
Figur 2 eine Draufsicht auf einen Depalettierer mit einer Palette in der zweiten Position gemäß der Erfindung zeigt,
Figur 3 eine Draufsicht auf einen Depalettierer mit einer Palette in der dritten Position gemäß der Erfindung zeigt,
Figur 4 eine Draufsicht auf einen Depalettierer mit einer Palette in der vierten Position gemäß der Erfindung zeigt,
Figur 5 eine Draufsicht auf einen Depalettierer mit einer Palette in der fünften Position gemäß der Erfindung zeigt,
Figur 6 eine Draufsicht auf einen Depalettierer mit einer Palette in der sechsten Position gemäß der Erfindung zeigt,
   zeigt Abbildung 7a einen Querschnitt des Depalettierers gemäß der Erfindung, und
   zeigt Abbildung 7b eine Vergrößerung von Abbildung 7a.

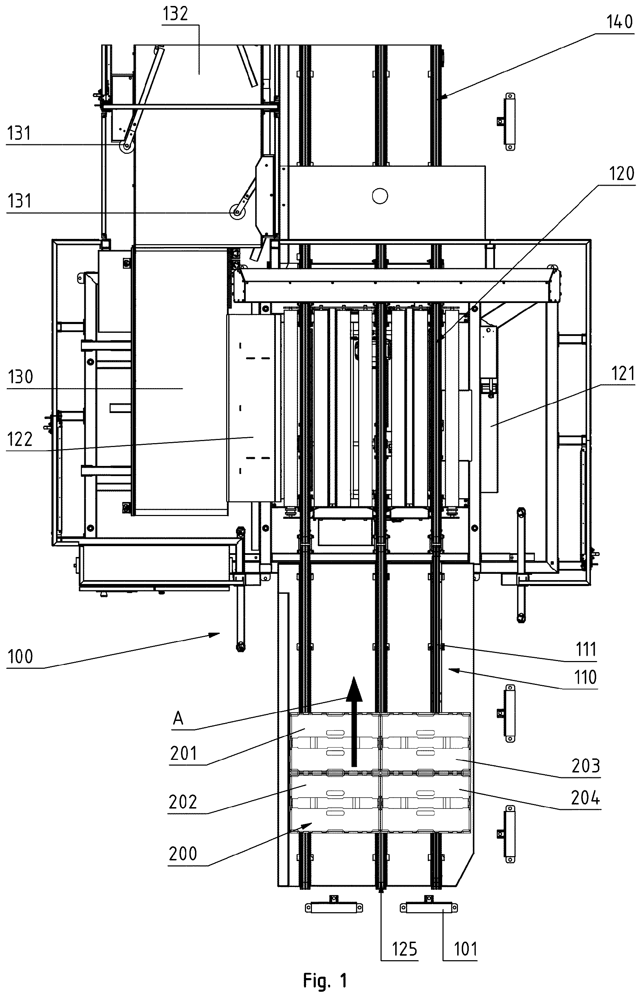

Mit der Bezugszahl 100 wird ein Depalettierer gemäß der Erfindung in Figur 1 bezeichnet.

In Figur 1 ist eine Palette 200 mit einer Ladung 201, 202, 203, 204 dargestellt, die beispielsweise aus Stapeln von gefalteten Behältern besteht. Die verschiedenen Stapel 201, 202, 203, 204 können aus Behältern bestehen, und jeder Stapel 201, 202, 203, 204 kann aus einem anderen Behältertyp gebildet sein, sodass die einzelnen Stapel 201, 202, 203, 204 unterschiedliche Abmessungen haben können, da sie aus Behältern mit unterschiedlichen Abmessungen und gefalteten Kanten bestehen.

Nach dem Beladen der Palette 200 im Ladebereich der Ladevorrichtung 110 wird die Palette 200 mittels bekannter Transportmittel 111 auf die Schiebevorrichtung 120 neben dem Ladebereich der Ladevorrichtung 110 bewegt, wobei die Richtung mit dem Buchstaben A angegeben ist.

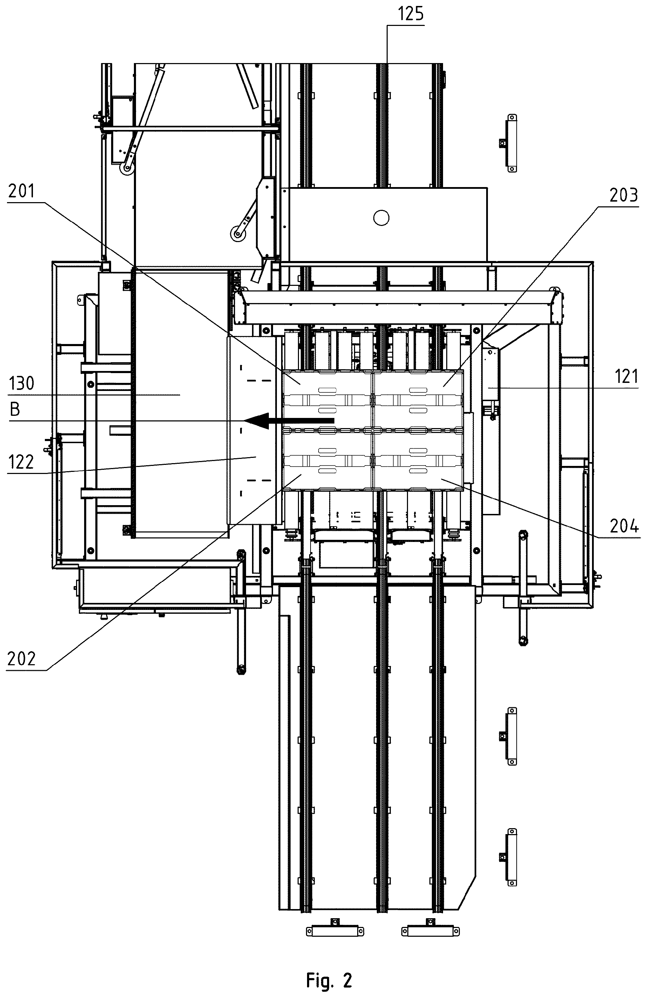

In Abbildung 2 befindet sich die Palette 200 auf der Schubvorrichtung 120. Die Schubvorrichtung 120 umfasst vorteilhafterweise Mittel zum Einstellen der Höhe der Palette 200 in Bezug auf eine Arbeitsfläche 122. Sobald die Palette 200 an der Arbeitsfläche 122 ausgerichtet ist, wird eine Schubstange 121 ausgerichtet und in ihrer Länge eingestellt, um die gesamte Ladung 201, 202, 203, 204 oder einen Teil der Ladung auf das Förderband 130 in Richtung B zu schieben.

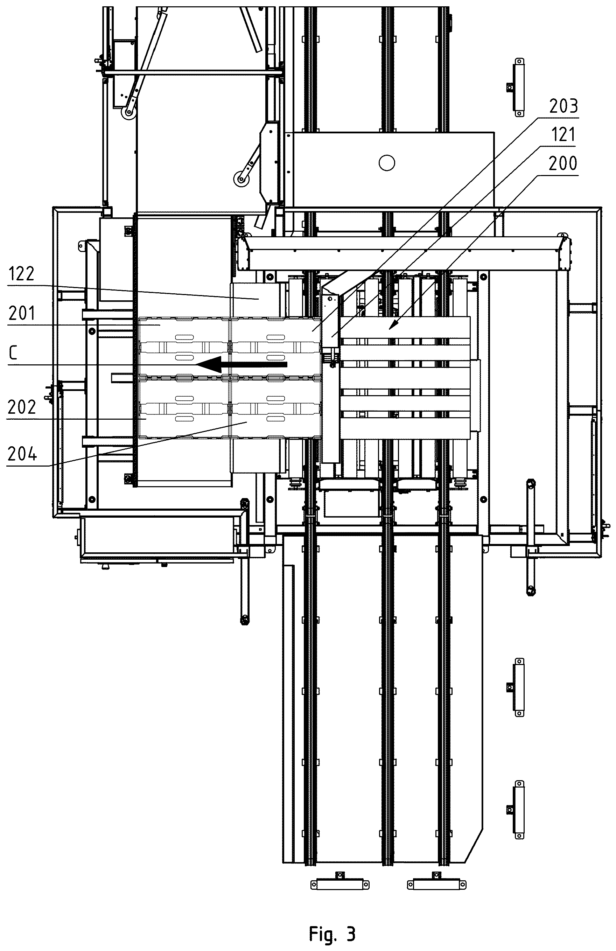

In Abbildung 3 werden beide vorderen Ladungen, die die Stapel 201, 202 bilden, durch die Schubstange 121 in Richtung C auf das Förderband 130 geschoben, während die hinteren Ladungen 203, 204 auf der Arbeitsfläche 122 verbleiben. Die Arbeitsfläche besteht vorteilhafterweise aus einer Metallplatte, die in der Ladephase eine Lippe 122a aufweist, die über das Förderband 130 hinausragt, um eine Verschiebung der Lasten 201, 202 auf dem Förderband zu ermöglichen, ohne dass die Gefahr besteht, dass die vorteilhafterweise aus Stapeln von Behältern/Kisten gebildete Ladung aufgrund einer Stufe oder einer Fuge umkippt. Insbesondere Kisten, die an der Unterseite einen erhöhten Rand aufweisen, können in einem Spalt zwischen der Ladefläche 122/Lippe und dem Förderband 130 hängen bleiben.

Die Lippe 122a weist vorteilhafterweise eine geringere Dicke als die Platte auf, die die restliche Arbeitsfläche 122 bildet.

Die Lippe 122a ist vorteilhafterweise zwischen 2 und 20 mm, vorteilhafterweise zwischen 7 und 10 mm, über dem ersten Förderband 130 angeordnet. Die Lippe 122a ist vorteilhafterweise in einer Höhe von 1 bis 10 mm, besonders vorteilhafterweise von 1 bis 5 mm, vom ersten Förderband 130 beabstandet.

Auf diese Weise kommt es zu keinem Kontakt zwischen der Lippe 122a und dem Förderband 130, wodurch verhindert wird, dass die Lippe 122a das Förderband 130 abnutzt oder zerschneidet.

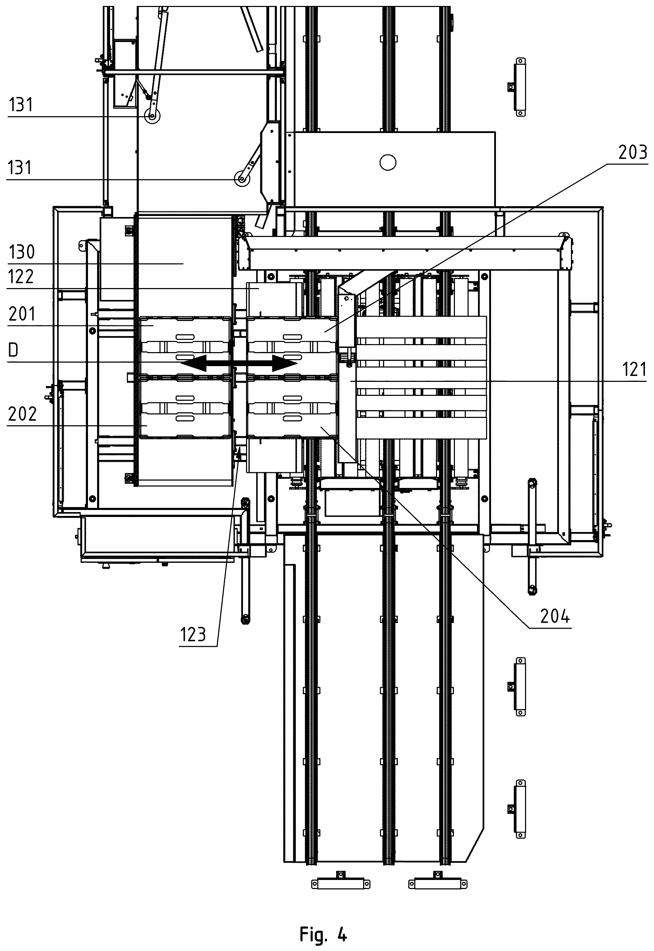

Die Schubstange 121 kann auch in ihrer Länge so eingestellt werden, dass sie nur einen Teil der Ladung, beispielsweise nur die Ladungen 201 und 203, schiebt, wie nicht dargestellt. Befindet sich die Schubstange 121 in der ausgestreckten Position, wie dargestellt, schiebt die Schubstange 121 die Ladungen 201, 202 auf das Förderband 130. Nach dem Positionieren der Lasten 201, 202 auf dem Förderband 130 kehrt die Schubstange in eine eingezogene Position zurück und die Arbeitsfläche 122 entfernt sich vom Förderband 130, wodurch ein Spalt 123 zwischen den Lasten 201,202 und den Lasten 203, 204 entsteht, wie in Abbildung 4 dargestellt, wobei die Richtung der Trennung zur Bildung des Spalts 123 mit dem Buchstaben D gekennzeichnet ist.

Der gebildete Spalt 123 beträgt vorteilhafterweise zwischen 50 und 200 mm, besonders vorteilhafterweise zwischen 75 und 125 mm.

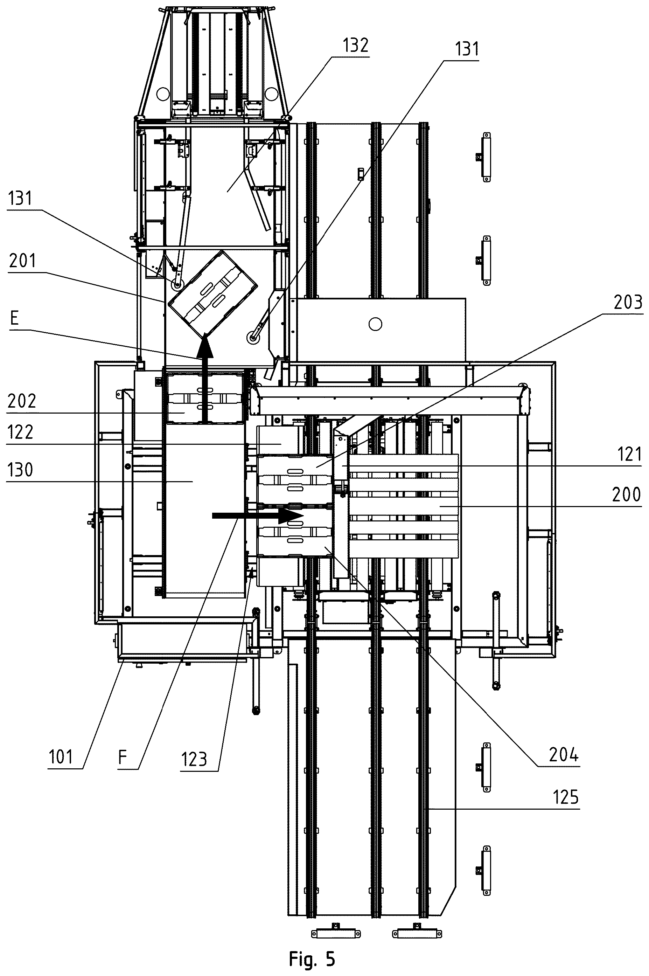

Dies ist erforderlich, um zu verhindern, dass die Ladungen 201, 202, 203, 204 miteinander verklemmen und beim Einschalten des Förderbandes 130, wie in Abbildung 5 dargestellt, beispielsweise die Ladung 201 die Ladung 204 einhakt und mitzieht oder sie in Förderrichtung F umkippt.

Stromabwärts auf dem zweiten Förderband 132 sind vorteilhafterweise Mittel zur Ausrichtung der Ladungen 131 vorgesehen, um die Ladungen in die gewünschte/erforderliche Position zu bringen.

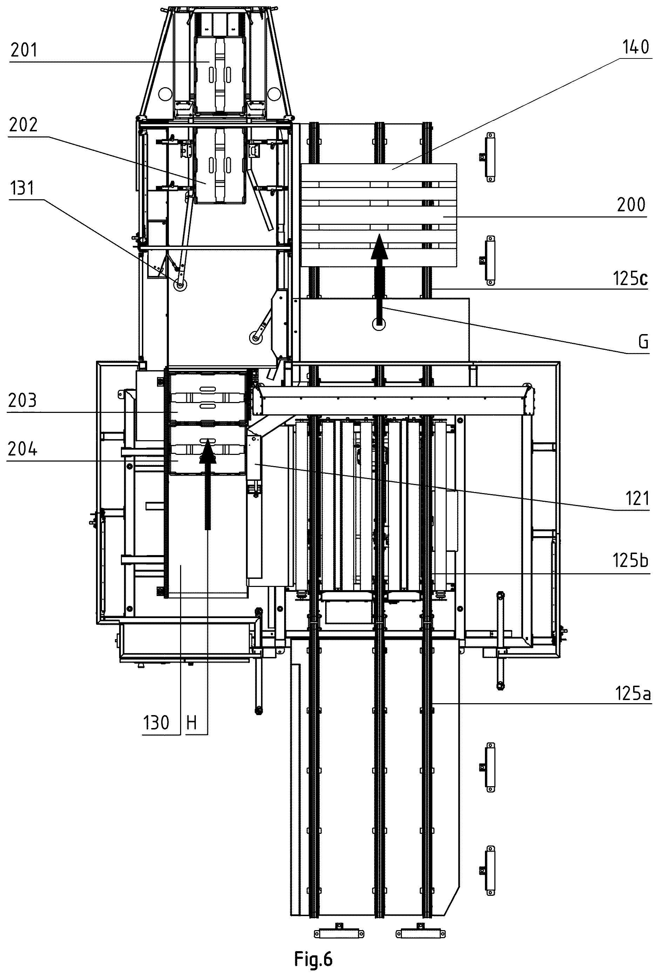

In Abbildung 6 wird die Lippe 122a wieder in die vorgeschobene Position über dem Förderband 130 gebracht, und mittels der Schubstange 121 wird die verbleibende Ladung auf das erste Förderband 130 bewegt und dann von einem zweiten Förderband 132 wegtransportiert und mittels der Ausrichtungsmittel 131 in Richtung H ausgerichtet. Vorteilhafterweise steht das Förderband 130 während der Ladephase der Ladungen 201, 202, 203, 204 still.

Nachdem die gesamte Ladung auf dem Förderband 130 positioniert wurde, wird die leere Palette 200 von der Schubvorrichtung 120 entfernt und vorteilhafterweise mittels des Kettenförderers 125, der vorteilhafterweise aus drei getrennten Teilen 125a, 125b und 125c besteht, in Richtung G in den Entladebereich 140 befördert. Vorteilhafterweise sind der Ladebereich mit der Ladevorrichtung 110, die Schubvorrichtung 120 und der Entladebereich 140 so ausgerichtet, dass die Schubvorrichtung 120 die Palette 200 mit einem einzigen Kettenförderer 125 transportieren kann, der vorteilhafterweise aus drei getrennten Teilen besteht, seitlich zum Förderband 130 angeordnet ist und zwischen ihnen die Arbeitsfläche 122 angeordnet ist.

Vorteilhafterweise kann die Arbeitsfläche 122 mechanisch, elektrisch, pneumatisch und/oder hydraulisch bewegt werden, um von einer ersten Position, in der die Lippe 122a das Förderband 130 überlappt, in eine zweite Position gebracht zu werden, in der zwischen dem Förderband 130 und der Arbeitsfläche 122 ein Spalt 123 gebildet wird. Die Bewegungsrichtung der Lippe 122a ist mit dem Buchstaben I gekennzeichnet. Diese Bewegung der Arbeitsfläche kann beispielsweise mittels Kolben erfolgen, die mit der Arbeitsfläche 122 verbunden sind, die aus einer Metallplatte besteht und auf ihrer dem Förderband 130 zugewandten Seite die Lippe 122a aufweist.

Die Schubstange kann beispielsweise mittels eines Gelenks in ihrer Länge verstellt werden, das ein Biegen der Schubstange 121 ermöglicht, oder die Schubstange kann teleskopisch ausgeführt sein, was eine Längenverstellung mittels Teleskopelementen ermöglicht.

Die Einstellung der Schubstange 121 kann auch mechanisch, elektrisch, pneumatisch und/oder hydraulisch erfolgen.

Vorteilhafterweise ist jeder Bereich/jede Vorrichtung in einer Schutzvorrichtung 101 angeordnet, um Störungen von außen oder das Herausfallen der Lasten zu verhindern.

Die einzelnen Bereiche/Vorrichtungen können aus einem einzigen Modul bestehen, wobei die einzelnen Module dann vor Ort montiert werden.

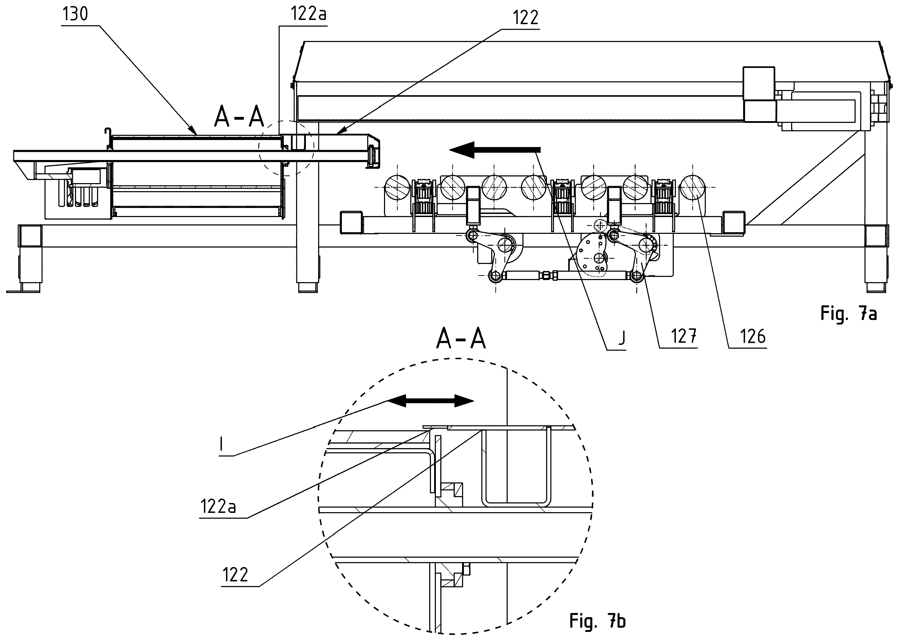

In Abbildung 7a ist ein Ausschnitt der Schubvorrichtung 120, der Arbeitsfläche 122 mit der Lippe 122a und dem Förderband dargestellt.

Um eine Palette 200 zu entpalettieren, führt der Depalettierer gemäß der Erfindung die folgenden Schritte aus:
- a) Laden einer Palette 200 mit Ladungen, vorzugsweise Stapeln von gefalteten Behältern 201, 202, 203, 204, auf eine Ladevorrichtung 110
- b) Transportieren der Palette von der Ladevorrichtung 110 zur Schubvorrichtung 120,
- c) Nivellieren der Palette 200 in der Schubvorrichtung 120 mit der Arbeitsfläche 122,
- d) mindestens eine Ladung 201, 202, 203, 204 mittels der Schubstange 121 auf das Förderband 130 schieben, vorteilhafterweise wird die Schubstange vor dem Schieben der Ladung in ihrer Länge verstellt, um zu bestimmen, ob nur ein Teil der Ladung geschoben werden soll,
- e) einen Spalt zwischen der Arbeitsfläche 122 und dem Förderband 130 durch Bewegen der Arbeitsfläche oder eines Teils der Arbeitsfläche 120 bilden,
- f) Entfernen der Lasten mittels des Förderbandes 130 und Ausrichten der Lasten mittels der Ausrichtungsmittel 131,
- g) Schließen des Spaltes zwischen der Arbeitsfläche 122 und dem Förderband,
- h) Wiederholen der Schritte d, e, f, g, bis die Palette 200 vollständig freigegeben ist,
- i) Bewegen der Palette 200 von der Schubvorrichtung in den Entladebereich 140.

Einige der zuvor beschriebenen Schritte können auch gleichzeitig ausgeführt werden, beispielsweise die Schritte d, e, f, g mit dem Schritt i.

Vorteilhafterweise wird die Palette in der Schubvorrichtung 125 von einem Rollenförderer 126 gestützt, der auch ein Hebesystem 127 umfasst, um die Palette 200 an der Arbeitsfläche 122 auszurichten, was bedeutet, dass die Oberseite, auf der die Ladung angeordnet ist, mit der Oberfläche der Arbeitsfläche 122 ausgerichtet ist, und der Rollenförderer 126 in Richtung J, wodurch die Palette 200 während der Schubphase der Schubstange 121 mit der Arbeitsfläche 122 in Kontakt gebracht wird, wodurch sichergestellt wird, dass kein Spalt zwischen der Arbeitsfläche und der Palette 200 entsteht.

Vorteilhafterweise wird die Hebevorrichtung 127 in ihrer Höhe durch ein Exzenterrad verstellt, das die Palette 200 je nach Dicke der Palette 200 anhebt oder absenkt.

Die zuvor beschriebenen Varianten des Depalettierers gemäß der Erfindung dienen lediglich dem besseren Verständnis des Aufbaus, der Funktionsweise und der Eigenschaften der vorgestellten Lösung; sie schränken die Offenbarung durch die Ausführungsbeispiele nicht ein. Die Abbildungen sind schematisch, wobei wesentliche Eigenschaften und Wirkungen teilweise deutlich vergrößert dargestellt sind, um die Funktionen, Wirkungsprinzipien, Konfigurationen und technischen Merkmale hervorzuheben. Damit kann jede Funktionsweise, jedes Prinzip, jede technische Konfiguration und jedes Merkmal, das in den Abbildungen oder im Text offenbart ist, frei und in beliebiger Weise mit allen Ansprüchen, jedem Merkmal im Text und in den anderen Abbildungen, anderen Funktionen, Prinzipien, Konfigurationen und technischen Merkmalen, die in dieser Offenbarung enthalten sind oder sich daraus ergeben, kombiniert werden kann, so dass alle denkbaren Kombinationen der beschriebenen Lösung zuzuordnen sind. Dazu gehören auch Kombinationen zwischen allen einzelnen Darstellungen im Text, d. h. in jedem Absatz des Textes, in den Ansprüchen und auch Kombinationen zwischen verschiedenen Varianten im Text, in den Abmessungen und in den Abbildungen. Die zuvor erläuterten Vorrichtungs-und Verfahrensdetails sind in der Verbindung dargestellt; es sei jedoch darauf hingewiesen, dass sie auch unabhängig voneinander und auch frei miteinander kombinierbar sind. Die in den Abbildungen dargestellten Verhältnisse der einzelnen Teile und Absätze zueinander sowie deren Abmessungen und Proportionen sind nicht als einschränkend zu verstehen. Einzelne Abmessungen und Proportionen können auch von den dargestellten abweichen. Auch die Ansprüche schränken die Offenbarung und damit die Kombinationsmöglichkeiten aller dargestellten Merkmale nicht ein. Alle dargestellten Merkmale sind hier auch einzeln und in Kombination mit allen anderen Merkmalen offenbart.

### Liste der Referenznummern

100 Depalettierer
101 Schutzvorrichtung
110 Ladevorrichtung
111 Transportmittel
120 Schubvorrichtung
121 Schubstange
122 Arbeitsfläche
122a Lippe
123 Schlitz
125 Kettenförderer
125a/125b/125c Teile des Kettenförderers und/oder separate Kettenförderer
126 Rollenförderer
127 Nivelliersystem
130 erstes Förderband/Förderelement
131 Mittel zur Ausrichtung der Lasten
132 zweites Förderband
140 Entladebereich
200 Palette
201 Ladung/Stapel gefalteter Behälter
202 Ladung/Stapel gefalteter Behälter
203 Ladung/Stapel gefalteter Behälter
204 Ladung/Stapel gefalteter Behälter
A Vorschubrichtung der Palette von der Ladevorrichtung 110 zur Schubvorrichtung 120
B Förderrichtung der Ladung 201,202,203,204 von der Schiebevorrichtung 120 zur Arbeitsfläche 122 /
C Förderrichtung der Ladung 201,202 von der Arbeitsfläche 122 zum ersten Förderband 130
D Trennung der Lasten 201, 202 von den Lasten 203, 204
E Bewegungsrichtung der Last 201, 202 vom ersten Förderband 130 zum zweiten Förderband 132
F Positionierung der Lasten 203, 204 auf der Arbeitsfläche
G Bewegung der Palette 200 in den Entladebereich 140
H Bewegungsrichtung der Ladung 203, 204 vom ersten Förderband 130 zum zweiten Förderband 132
I Bewegungsrichtungen der Arbeitsfläche 122 und der Lippe 122a
J Bewegungsrichtung des Seitenförderers 126

## Patentansprüche

1. Depalettierer (100) für Paletten (200) bestehend aus:
- einer Positionierungsvorrichtung (110) mit einer Ladefläche mit Lademitteln zum Bewegen mindestens einer Palette (200), auf der eine Ladung (201, 202, 203, 204) angeordnet ist, vom Ladebereich zu einer Schubvorrichtung (120),
- einer Arbeitsfläche (122)
- die Schiebevorrichtung (120) zum Ausrichten der Palette (200) auf der Arbeitsfläche (122) auszurichten und die eine Schubstange (121) umfasst, die betätigt wird, um die Ladung (201, 202, 203, 204) der mindestens einen Palette auf ein erstes Übertragungselement (130) neben der Schubvorrichtung zu schieben,
- das erste Übertragungselement (130),
- einen Entladebereich (140) neben der Schubvorrichtung (120), in den die leere Palette (200) nach dem Entpalettieren bewegt wird, **dadurch gekennzeichnet, dass**
- die Schubstange (121) in ihrer Länge verstellbar ist, um nur einen Teil der Ladung (201, 202, 203, 204) von der Palette zu schieben, und dass zwischen der Schubeinrichtung (120) und dem ersten Übergabeteil (130) die Arbeitsfläche (122) angeordnet ist und dass in der vorgeschobenen Position die Arbeitsfläche (122) zumindest teilweise mit dem ersten Übertragungselement (130) in Kontakt steht und/oder dieses überlappt und in der zurückgezogenen Position zwischen der Arbeitsfläche (122) und dem ersten Übertragungselement (130) ein Spalt (123) gebildet wird.

2. Depalettierer (100) für Paletten (200) nach Anspruch 1, **dadurch gekennzeichnet, dass** die Arbeitsfläche an der Vorderseite auf der Seite des ersten Übertragungsorgans (130) eine Lippe (122a) aufweist und dass die Lippe (122a) zumindest teilweise das erste Übertragungsorgan (130) überlappt und in der zurückgezogenen Position zwischen der Lippe (122a) und dem ersten Übertragungselement (130) ein Schlitz gebildet ist.

3. Depalettierer (100) für Paletten (200) nach Anspruch 1 oder 2, **dadurch gekennzeichnet, dass** die Schiebevorrichtung (120) einen Rollenförderer (126) umfasst, der die Palette (200) während des Schiebens mittels der Schubstange (121) gegen die Arbeitsfläche (122) schiebt.

4. Depalettierer (100) für Paletten (200) gemäß Anspruch 2 oder 3, **dadurch gekennzeichnet, dass** die Lippe (122a) und das erste Übertragungselement, das ein Förderband (130) ist, in der Höhe zwischen 1 und 10 mm voneinander beabstandet sind.

5. Depalettierer (100) für Paletten (200) gemäß einem der Ansprüche 2 bis 4, **dadurch gekennzeichnet, dass** sich die Lippe (122a) 2 bis 20 mm, vorzugsweise 7 bis 10 mm, über das erste Förderorgan (130) erstreckt.

6. Depalettierer (100) für Paletten (200) gemäß einem der vorstehenden Ansprüche, **dadurch gekennzeichnet, dass** der in der zurückgezogenen Position zwischen der Lippe (122a)/Arbeitsfläche (120) und dem ersten Übertragungselement (130) gebildete Spalt (123) zwischen 50 mm und 200 mm beträgt.

7. Depalettierer (100) für Paletten (200) gemäß einem der Ansprüche 4 bis 6, **dadurch gekennzeichnet, dass** das erste Übertragungsorgan ein Förderband (130) ist und dass dem ersten Förderband (130) ein zweites Förderband (132) nachgeschaltet angeordnet ist auf dem Mittel zur Ausrichtung der Lasten (131) angeordnet sind.

8. Depalettierer (100) für Paletten (200) gemäß einem der Ansprüche 2 bis 7, **dadurch gekennzeichnet, dass** die Lippe (122a) und die Arbeitsfläche (122) aus einer Metallplatte bestehen und dass die Lippe (122a) eine geringere Dicke als die Arbeitsfläche (122) aufweist.

9. Verfahren zum Depalettieren einer Palette (200) mit einem Depalettierer (200) gemäß einem der vorstehenden Ansprüche, umfassend die folgenden Schritte:
- a) Laden einer Palette (200) mit vorzugsweise Stapeln von gefalteten Behältern (201, 202, 203, 204) auf eine Ladevorrichtung (110)
- b) Transportieren der Palette von der Ladevorrichtung (110) zur Schubvorrichtung (120),
- c) Nivellieren der Palette (200) in der Schubvorrichtung (120) mit der Arbeitsfläche (122) ,
- d) mindestens eine Ladung (201, 202, 203, 204) mittels der Schubstange (121) auf ein Förderorgan (130) schieben, vorteilhafterweise wird die Schubstange (121) vor dem Schieben der Ladung in ihrer Länge verstellt, um zu bestimmen, ob nur ein Teil der Ladung geschoben werden soll.
- e) einen Spalt zwischen der Arbeitsfläche (120) und dem Förderorgan (130) durch Bewegen der Arbeitsfläche oder eines Teils der Arbeitsfläche (120) bilden,
- f) Entfernen der Lasten mittels des Förderorgans (130) und Ausrichten der Lasten mittels der Ausrichtungsmittel,
- g) Schließen des Spalts zwischen der Arbeitsfläche (122) und dem Förderorgan (130),
- h) Wiederholen der Schritte d, e, f, g, bis die Palette (200) vollständig freigegeben ist,
- i) Bewegen der Palette (200) von der Schubvorrichtung in den Entladebereich (140).
